# EUROPÄISCHE PATENTSCHRIFT

(11) **EP 1 897 680 B1**
(45) Veröffentlichungstag und Bekanntmachung des Hinweises auf die Patenterteilung: **12.11.2008**
(21) Anmeldenummer: 06120325.3
(22) Anmeldetag: 07.09.2006
(51) Int. Cl.: B29D 24/00, B32B 3/12, B29L 31/30

(54) **Verfahren zur Herstellung eines Sandwich-Bauteils mit einem Wabenkern**
Manufacturing process of a honeycomb sandwich panel
Procédé de fabrication d'un matériau sandwich avec une âme en nid d'abeille

(43) Veröffentlichungstag der Anmeldung: 12.03.2008
(73) Patentinhaber: EURO-COMPOSITES S.A., L-6401 Echternach (LU)
(72) Erfinder: Bottler, Oliver, 54329 Konz (DE); Freres, Patrick, 9643 Buederscheid (LU)
(74) Vertreter: Schmitt, Armand

(56) Entgegenhaltungen:
- EP-A- 1 270 198
- EP-A- 1 308 266
- EP-A1- 1 086 801
- EP-A1- 1 181 149
- WO-A-02/074469
- DE-A1- 10 146 201
- DE-A1- 19 813 104
- DE-A1-3102005 003 71

## Beschreibung

### Technisches Gebiet

Im Allgemeinen betrifft die vorliegende Erfindung Leichtbau-Faserverbundbauteile in Sandwichbauweise mit einem offenzelligen Kern als Trägermaterial für den Faserverbund. Im einzelnen betrifft die Erfindung ein Herstellungsverfahren für ein solches faserverstärktes Sandwich-Bauteil mit einem Wabenkern.

### Stand der Technik

Faserverstärkte Sandwich-Bauteile mit einem an sich offenen Kern wie beispielsweise einem Wabenkern, welcher beidseitig durch eine Deckschicht aus Faserverbund verschlossen ist, sind an sich bekannt und finden in verschiedensten Bereichen Anwendung. Sie werden z.B. im Fahrzeugbau für Luft- und Raumfahrt, für Schifffahrt und auch im Kraft- und Eisenbahn-Fahrzeugbau angewendet. Zu den wichtigsten Vorteilen solcher Bauteile gehört ein sehr hohes Verhältnis von Festigkeit zu Gewicht. Sie tragen also zur Gewichtsreduzierung bei. Bei den genannten Bauteilen ist unter anderem die Qualität der Verbindung zwischen den Deckschichten aus Faserverbund und dem Wabenkern ein sehr wichtiger Punkt im Hinblick auf hohe Festigkeit.

Ein bekanntes Autoklav-basiertes Verfahren zur Herstellung solcher Bauteile umfasst das Auflegen von übereinandergeschichteten mit ungehärtetem Harz vorimprägnierten Faser-Lagen, sogenannte "Prepregs", auf den Wabenkern und eine anschließende Druck- unter Temperaturbehandlung des Geleges im Autoklav. Mittels Behandlung im Autoklav-Zyklus erfolgt einerseits die Herstellung der Faserverbund-Decksichten aus den Prepreg-Lagen, durch Gelieren und anschließendes Aushärten des Harzes, und andererseits die Anbindung der Deckschichten an den Wabenkern durch an den Wabenstegen aushärtendes Harz. Zur Herstellung von qualitativ hochwertigen Faserverbundbauteilen mit Wabenkern werden derzeit vorwiegend solche Autoklav-Verfahren angewendet. Nachteilig bei diesem Verfahren sind unter anderem sehr hohe Anschaffungs- und Betriebskosten sowie Einschränkungen der möglichen Bauteilgrößen, beides durch den Autoklav bedingt. Weiterhin hat die Prepreg-Technik aufwendige Auflegearbeiten der dünnen Lagen, eine geringe Haltbarkeit der Prepreg-Lagen und hieraus resultierende spezielle Lagerungsanforderungen zum Nachteil.

Ein anderes bekanntes Verfahren zur Herstellung von faserverstärkten Sandwich-Bauteilen mit Wabenkern beruht auf dem sogenannten RTM (Resin-Transfer-Molding) Verfahren. Bei diesem Verfahren wird der Kern mit hierauf angeordneten Schichten aus trockenem, d.h. nicht vorimprägniertem, Fasermaterial in einer verschließbaren Form angeordnet. Die Form besteht aus zwei heizbaren Formhälften deren Innenkontur der Außenkontur des fertigen Bauteils entspricht. Im geschlossenen Formraum wird dem trockenen Fasermaterial flüssiges Harz zugeführt werden. Das Harz wird durch Beheizen der Form ausgehärtet. Hierbei kann das Harz entweder bei Überdruck in der RTM-Form oder bei Vakuum in der RTM-Form zugeführt. Der jeweilige Druckunterschied dient u.a. der Vermeidung unerwünschter Lufteinschlüsse in der Deckschicht. Mittels trockener Fasergelege werden verschiedene Nachteile der Prepreg-Technik vermieden. Bei solchen RTM Verfahren muss allerdings ein unerwünschtes Eindringen von flüssigem Harz in die offenen Zellen des Wabenkerns verhindert werden. Hierzu ist es bekannt, den Wabenkern beidseitig mit einer Harz-undurchlässigen Sperrschicht zu verschließen, welche ein Füllen der Wabenzellen mit flüssigem Harz verhindert. Die zwischengefügte Sperrschicht ist allerdings insofern problematisch als die Anbindung zwischen Wabe und Deckschicht nicht mehr direkt durch das Harz der Deckschicht erzielt werden kann. Ein entsprechendes RTM Verfahren welches Überdruck in der Form anwendet, ist aus der EP 0 722 825 bekannt. Entsprechende RTM Verfahren, welche Vakuum in der Form vorschlagen sind aus der EP 0 770 472, der EP 0 786 330 und der EP 1 281 505 bekannt. Ein weiteres RTM Verfahren, bei welchem der Wabenkern versiegelt wird indem eine Sperrschicht durch Aushärten einer Klebeschicht unter zuvor angelegtem Vakuum an den Kern angebunden wird, ist aus der WO 02/074469 bekannt. Auch diese Verfahren bergen allerdings den Nachteil hoher Anschaffungs- und Betriebskosten. Es wird u.a. für jeden Bauteiltyp eine spezielle, kostspielige heizbare RTM - Form benötigt.

Auf hohes Interesse stoßen deshalb Verfahren, welche nicht auf RTM- oder Autoklav-Lösungen beruhen. Solche Verfahren sollten größere Bauteile mit Wabenkern kostengünstiger in Serienfertigung herstellbar machen, idealerweise in gleichwertiger Qualität.

Zu diesen Verfahren gehören die sogenannten VARTM (Vacuum Assisted RTM) Verfahren. In der EP 1 524 105 wurde von der Anmelderin vorgeschlagen, ein Verfahren, bei welchem nur ein einteiliges nicht beheizbares Formwerkzeug verwendet wird, das mit einem Vakuumsack abgedichtet wird, auch als Vakuuminfusionsverfahren bezeichnet, auch in der Herstellung von Sandwich-Bauteilen mit offenzelligem Kern anzuwenden. Im Gegensatz zu Vakuumsackformverfahren mit Prepregs, werden bei den VARTM-Verfahren auch trockene Faserlagen und flüssige Harzinfusion angewendet. Ein weiteres Vakuuminfusionsverfahren zur Herstellung eines Wabenkem-Faserverbundbauteils ist als Ausführungsbeispiel aus der EP 1 308 266 bekannt. Hierbei wird der Wabenkern bspw. mittels einem festen, klebbaren Film und einer Klebeschicht harz-undurchlässig verschlossen. Gemäss der EP 1 308 266 kann ein einziger Prozesszyklus zur Herstellung des Faserverbundbauteils auch die thermische Behandlung zur Anbindung des festen Films an den Wabenkern enthalten.

Derzeit erzeugen VARTM-Verfahren jedoch gegenüber den Autoklav-Verfahren zum Teil geringer Faservolumenanteile, höhere Schwankungen in der Dickenabmessung sowie höhere Porositätswerte der Faserverbundschichten. Insbesondere bei deren Anwendung auf Sandwich-Bauteile mit offenzelligem Kern, bedingt u.a. durch die ebenfalls notwendige Sperrschicht, ist bei diesen Verfahren auch die Qualität der Verbindung zwischen den Deckschichten aus Faserverbund bzw. der Sperrschicht und dem Kernmaterial verbesserungsbedürftig. Bei Anwendungen mit sehr hohen Qualitätsanforderungen, beispielsweise als Strukturbauteile für die Luftfahrt, verhindern die obigen Schwierigkeiten derzeit eine weite Verbreitung von Sandwich-Bauteilen, insbesondere mit offenzelligem Kern, welche mittels VARTM-Verfahren kostengünstig erzeugt wurden.

### Aufgabe der Erfindung

Eine Aufgabe der vorliegenden Erfindung ist es, ein Verfahren vorzuschlagen zur Herstellung eines faserverstärkten Sandwich-Bauteils mit einem offenzelligen Kern, insbesondere einem Wabenkem. Mit diesem Verfahren sollen sich Bauteile erzeugen lassen, die sehr hohen Qualitätsanforderungen gerecht werden. Insbesondere soll bei den mit diesem Verfahren hergestellten Bauteilen die Verbindung zwischen den Faserverbund-Deckschichten und dem Kern höheren Qualitätsanforderungen genügen.

### Allgemeine Beschreibung der Erfindung

Das erfindungsgemäße Verfahren dient zur Herstellung eines faserverstärkten Sandwich-Bauteils mit einem Wabenkern, dessen Waben beidseitig verschlossen sind und dies zumindest einseitig mittels einer Deckschicht aus Fasermaterial welches in Matrixmaterial eingebettet ist. Die Aufgabe der Erfindung wird dadurch gelöst, dass das Verfahren folgende Schritte umfasst:
Herstellen eines Geleges umfassend den Wabenkern, sowie zumindest einseitig auf dem Wabenkern, von Innen nach Außen angeordnet, eine aushärtbare Klebeschicht, eine Sperrschicht und eine Faserschicht;
   - Einschließen des Geleges in einen gasdichten Raum;
   - Erzeugen eines Vakuums in diesem gasdichten Raum;
   - Aus- bzw. Anhärten der Klebeschicht zwischen Wabenkern und
Sperrschicht unter diesem Vakuum, so dass die Wabenzellen zumindest teilweise evakuiert sind bevor sie durch die Sperrschicht verschlossen werden:
   - nach dem Aus- bzw. Anhärten der Klebeschicht, Infusion der Faserschicht unter Vakuum mit einem Matrixmaterial, und
   - Aushärten des Matrixmaterials unter Vakuum.

Durch dieses Verfahren werden unter anderem zwei wesentliche Vorteile erzielt. Einerseits wird, aufgrund der zumindest teilweise evakuierten Wabenzellen, die Klebeverbindung zwischen Sperrschicht(en) und Wabenkern verbessert, so dass eine höhere Zugfestigkeit in Richtung senkrecht zu den Sandwich-Schichten gewährleistet wird. Es wird angenommen, dass dies auf eine homogenere Anbindung der Klebeschicht(en) an die Wabenzellen und auf eine Minimierung von Luft- bzw. Gaseinschlüssen in der Klebeschicht selbst zurückzuführen ist. Andererseits, wird eine unerwünschte Porenbildung in dem ausgehärteten Matrixmaterial der Deckschicht(en) und in der/den Klebeschicht(en) dahingehend minimiert, dass aus den Wabenzellen nahezu kein oder kein Gas in das Matrixmaterial oder die Klebeschicht(en) diffundiert während dessen Aushärtung. Eine Minimierung von Luft- bzw. Gaseinschlüssen im Matrixmaterial der Deckschicht(en) und in der/den Klebeschicht(en) trägt zu einer verbesserten Klebeverbindung mit der Sperrschicht bzw. dem Wabenkern bei.

Entgegen der bisher einhelligen Auffassung, dass faserverstärkte Sandwich-Bauteile, welche hohen Qualitätsanforderungen gerecht werden sollen, z.B. für die Anwendung als Strukturbauteile in der Luftfahrt, nur mittels Autoklav- oder eventuell RTM-basierten Verfahren herstellbar sind, gelingt es mit dem vorgeschlagenen, modifizierten autoklavlosen und überdrucklosen Verfahren, Bauteile hoher Qualität herzustellen. Im Vergleich zu herkömmlichen, Autoklav- oder RTM-basierten Verfahren, welche bisher zur Herstellung von Sandwich-Bauteilen mit hoher Festigkeit und geringer Porosität verwendet wurden, lassen sich also mit dem erfindungsgemäßen Verfahren Bauteile vergleichbarer Qualität wesentlich kostengünstiger herstellen.

In einer besonders bevorzugten Ausführung umfasst das Verfahren weiterhin ein Einschließen des Geleges in einen bezüglich Matrixmaterial dichten Teilraum innerhalb des gasdichten Raums mittels einer mikroporösen Membran, welche für Matrixmaterial undurchlässig und für Gase durchlässig ist. Anhand dieser Membran wird auch der Teilraum mit Vakuum beaufschlagt, ohne dass aus diesem Teilraum flüssiges Matrixmaterial hinausfließen kann. Bei dieser Abwandlung wird das Prinzip des sogenannten VAP-Verfahrens ("Vacuum Assisted Process"), welches ein verbessertes VARTM-Verfahren darstellt, angewendet. Das VAP-Verfahren ist z.B. in den Patentschriften DE 198 13 104 und EP 1 181 149 und in einem Artikel mit dem Titel "VAP für Faserverbundteile" der Zeitschrift "Automotive Materials", Ausgabe 03/05, S.38-40 näher beschrieben. Durch die Verwendung einer Membran deren Porengröße so gewählt ist, dass Luft und andere Gase ungehindert abgeführt werden können, das Harz jedoch nicht durch die Membran dringen kann, wird während der Infusion und der Aushärtung ein gleichmäßiges entlüften bzw. entgasen des Matrixmaterials und somit eine noch geringere Porosität des Faserverbundwerkstoffs erzielt. Die Membran entfaltet Ihre Wirkung indem sie, über die gesamte, mit Matrixmaterial getränkte Oberfläche in Querrichtung, eine gleichmäßige Entlüftung bzw. Entgasung ermöglicht. Hierdurch wird auch ein verbessertes Fliessverhalten des flüssig infusionierten Harzes und die Vermeidung sogenannter "dry spots" ermöglicht.

In Kombination mit dem erfindungsgemäßen Verfahren hat sich zusätzlich herausgestellt, dass die erzielte gleichmäßige und großflächige Entlüftung bzw. Entgasung durch das VAP-Verfahren sich in zwei Hinsichten positiv auf die Verbesserung der Klebeverbindung zwischen den Faserverbund-Deckschichten und dem Wabenkern auswirkt. Einerseits werden sowohl die Wabenzellen, wie auch die aushärtende Klebeschicht(en) gleichmäßiger, schneller und zu einem höheren Grad entgast bzw. entlüftet, wodurch die Anbindung zwischen Sperrschicht(en) und Wabenkern zusätzlich verbessert wird. Andererseits wird die Porenbildung im Matrixmaterial des Faserverbunds drastisch reduziert, wodurch unter anderem auch die Klebeverbindung zwischen Deckschicht(en) und Sperrschicht(en) höheren Anforderungen gerecht wird. Eine geringere Porosität der Decksicht(en) bedeutet auch eine geringer Anfälligkeit des Sandwichbauteils für unerwünschte Feuchtigkeitsansammlung in den Wabenzellen. Eine längerfristig gewichtserhöhende Feuchtigkeitsansammlung kann z.B. durch Kondensatbildung unter Temperatur- und Druckschwankungen, insbesondere bei Anwendung als Strukturbauteil in der Luftfahrt auftreten. Hierzu sollte angemerkt werden, dass bei geeigneter Wahl der Sperrschicht(en) und der Klebeschicht(en), letztere auch einen wesentlichen Beitrag zur Verringerung der Feuchtigkeitsansammlung in den Wabenzellen leisten.

Bevorzugt werden beim erfindungsgemäßen Verfahren das Gelege und gegebenenfalls die mikroporöse Membran, welche das Gelege einschließt, mittels einer Vakuumfolie auf einem einseitigen Formwerkzeug in den gasdichten Raum eingeschlossen. Im Vergleich zu RTM-Verfahren wird nur ein einteiliges Formwerkzeug benötigt, welches nicht beheizbar sein muss. Durch das Vakuum im geschlossenen Raum wird der äußere, üblicherweise atmosphärische Druck auf die Vakuumfolie zur Formung der auf dem Formwerkzeug obenliegenden Oberfläche des Bauteils verwendet.

In einer Verfahrensvariante wird Vakuuminfusion nach dem sogenannten "Resin Infusion" Prinzip zum Tränken der Faserschicht mit Matrixmaterial angewendet. Hierbei umfasst die Infusion der Faserschicht(en) ein Tränken des Fasermaterials mittels flüssigem Matrixmaterial, welches von Außen dem Gelege zugeführt wird.

In einer alternativen oder ergänzenden Verfahrensvariante wird Vakuuminfusion nach dem sogenannten "Resin Film Infusion" Prinzip zum Tränken der Faserschicht mit Matrixmaterial angewendet. Hierbei umfasst die Infusion der Faserschicht(en) ein Tränken des Fasermaterials anhand von verflüssigtem Matrixmaterial aus einem oder mehreren, anfänglich zum Gelege gehörenden Matrixmaterial-Filmen.

Als Sperrschicht wird vorzugsweise eine Folie verwendet wird, welche oberflächenbehandelt ist, vorzugsweise durch eine Plasma- oder Corona-Oberflächenbehandlung, durch ein Beschichtungsverfahren oder durch eine Kombination hiervon. Ein Beschichtungsverfahren ermöglicht eine chemisch/physikalisch verbesserte Kopplungsschicht für die Klebeschicht(en) und/oder das Matrixmaterial. Durch eine Plasma- oder Corona-Oberflächenbehandlung lässt sich die Oberflächenbeschaffenheit gezielt beeinflussen. Durch beide Maßnahmen, einzeln oder in Kombination, lässt sich die jeweilige Klebeverbindung zusätzlich verbessern.

Vorzugsweise wird beim Verfahren die Verweildauer des Geleges unter Vakuum und/oder die Steigung der Temperaturkurve vor dem Aus- bzw. Anhärten der Klebeschicht unter Wärmeeinwirkung derart gewählt, dass, bevor die Klebeschicht an- bzw. ausgehärtet ist, eine maximale Evakuierung der Wabenzellen erzielt wird. Die maximale Evakuierung entspricht zumindest annähernd dem erzeugten Vakuum. Weiterhin wird bevorzugt ein Vakuum von ≤ 10mbar, vorzugsweise ≤ 1 mbar erzeugt, um eine größtmögliche Entlüftung bzw. Entgasung sowohl der Waben zellen wie auch des Matrixmaterials zu erzielen. Der Vakuumdruck kann allerdings auch abhängig vom verwendeten Matrixmaterial und/oder Klebeschicht-Material bei der Aushärtung reduziert werden, um zu vermeiden, dass das jeweilige Material seinen Siedepunkt erreicht.

Das Aus- bzw. Anhärten der Klebeschicht durch Wärmeeinwirkung kann bei einer ersten Prozesstemperatur ausgeführt werden, welche sich von einer zweiten Prozesstemperatur beim Aushärten des Matrixmaterials unterscheidet. In diesem Fall ist es vorteilhaft, wenn für die Klebeschicht ein Klebefilm auf Basis von einem Epoxydharz oder einem Phenolharz oder einem Gemisch hiervon verwendet wird, welcher im Bereich von der ersten und der zweiten Prozesstemperatur aushärtbar ist. Hierdurch werden einerseits ungewollte und unkontrollierte Veränderungen (z.B. Veränderung des E-Moduls, Rissbildung, etc.) der Klebeschicht(en) durch Übertemperieren während dem Aushärten des Matrixmaterials vermieden. Andererseits lassen sich Einsparungen realisieren, indem die sogenannt "doppelt aushärtbare" Klebeschicht erst während der Aushärtephase des Matrixmaterials definitiv ausgehärtet wird.

Um die Anbindung der Sperrschicht(en) an den Wabenkern weiter zu optimieren, umfasst das Verfahren vorzugsweise ein anfängliches Vortrocken, Ausblasen, und/oder Oberflächenreinigen des Wabenkerns. Zusätzlich können für die Klebeschicht verwendete Klebefilme an den Wabenkern angepresst werden, bevor die Sperrschicht hierauf angebracht wird.

Die gemäss oben beschriebenen Verfahren herstellbaren Sandwich-Bauteile sind dadurch gekennzeichnet, dass die Deckschicht einen Porenvolumengehalt ≤ 2% aufweist. Weiterhin sind diese Sandwich-Bauteile dadurch gekennzeichnet, dass mit dem Sandwich-Bauteil eine Zugfestigkeit senkrecht zu den Sandwich-Schichten ("flatwise tensile strength") von ≥ 3MPa (=N/mm²), entsprechend AITM 1.0025 (Issue 1), beziehungsweise, bei einer entsprechenden Eigenzugfestigkeit des Wabenkerns von < 3MPa, in einem Zugversuch ein Wabenbruch erzielt wird. Hierbei gilt insbesondere zu beachten, dass bis zur genannten Zugfestigkeit kein Bruch in den entsprechenden Klebeverbindungen zwischen Deckschicht und Sperrschicht bzw. zwischen Sperrschicht und Wabenkern auftritt. Der Zugfestigkeitswert ist eine Maß für die generelle Festigkeit des Sandwichbauteils.

Mit dem erfindungsgemäßen Verfahren lassen sich je nach verwendeten Materialien und Verfahrensvarianten auch noch höhere Zugfestigkeits-Werte bzw. noch geringere Porositätswerte erzielen. Man sollte beachten, dass Sandwich-Bauteile mit Wabenkern, welche diesen Qualitätsanforderung gerecht werden, konnten bisher generell nur mittels teureren Autoklav-unterstützten Verfahren hergestellt werden.

Vorzugsweise weist das Sandwich-Bauteil eine Zugfestigkeit senkrecht zu den Sandwich-Schichten von mindestens 1.5 MPa, entsprechend AITM 1.0025 (Issue 1), auf, d.h. dass bis zu diesem Wert kein Wabenbruch auftritt.

Wird beim Verfahren zusätzlich die Membran gemäss dem VAP-Prinzip verwendet, lassen sich Sandwich-Bauteile mit Wabenkern herstellen, deren Deckschicht einen Porenvolumengehalt < 0,5% aufweist. Der Porenvolumengehalt lässt sich durch zerstörungsfreie Prüfung, beispielsweise basierend auf bekannten Ultraschall- oder Röntgenmethoden, nachweisen bzw. kontrollieren.

Schließlich bleibt festzuhalten, dass, obwohl das erfindungsgemäße Verfahren hauptsächlich zur Herstellung von Sandwich-Bauteilen mit Wabenkern in Betracht gezogen wird, das Verfahren auch vorteilhaft mit anderen offenzelligen Kernmaterialtypen, wie z.B. schwer kompaktierbaren offenzelligen Schäumen, vorzugsweise geringer Dichte, z.B. Metallschäumen angewendet werden kann.

### Kurze Beschreibung der Figuren

Weitere Einzelheiten und Vorteile der Erfindung können der nachfolgenden ausführlichen Beschreibung möglicher Ausführungsformen der Erfindung anhand der beiliegenden Figuren entnommen werden. Diese zeigen:
Fig.1: einen schematischen Querschnitt eines faserverstärkten Sandwich-Bauteils mit einem Wabenkern, welches mittels dem erfindungsgemäßen Verfahren hergestellt wurde;
Fig. 2: ein schematisches Gelege (lay-up) zum Vorbereiten eines Wabenkerns für das erfindungsgemäße Verfahren;
Fig. 3: einen schematischen Aufbau, mit einem Gelege (lay-up) umfassend den vorbereiteten Wabenkern, zu einer Ausführung des erfindungsgemäßen Verfahrens;
Fig.4: einen schematischen Aufbau zu einer weiteren Ausführung des erfindungsgemäßen Verfahrens;
Fig. 5: ein Ablauf-Diagramm zu einem ersten Beispiel weiterer Verfahrensschritte;
Fig. 6: ein Ablauf-Diagramm zu einem zweiten Beispiel weiterer Verfahrensschritte;
Fig. 7: ein Ablauf-Diagramm zu einem dritten Beispiel weiterer Verfahrensschritte.

### Beschreibung bevorzugter Ausgestaltungen der Erfindung

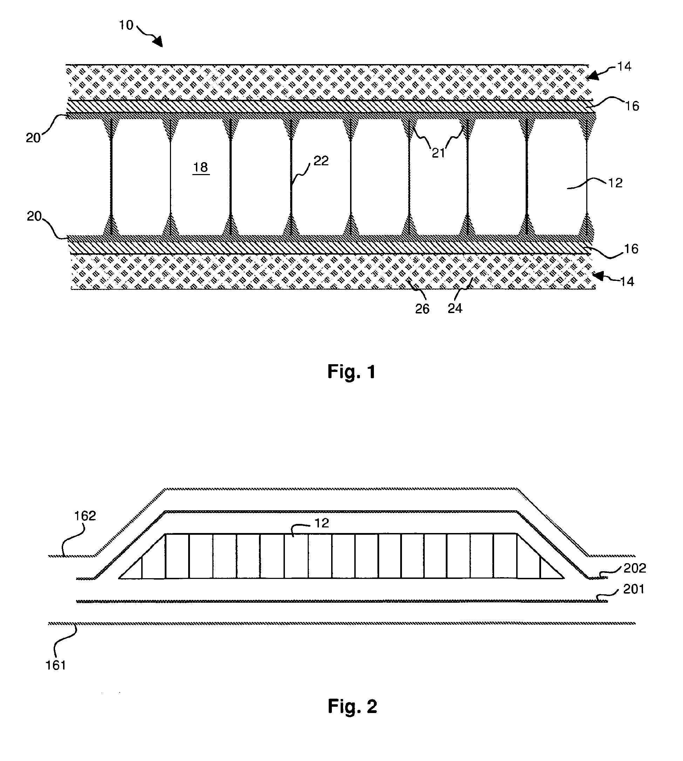

In Fig.1 ist ein, in Leichtbauweise hergestelltes, faserverstärktes Sandwich-Bauteil schematisch und nicht maßstabgetreu abgebildet und allgemein mit Referenzzeichen 10 bezeichnet. Das Sandwich-Bauteil 10 umfasst einen ursprünglich offenzelligen Wabenkern 12. Weiterhin umfasst das Sandwich-Bauteil 10 zwei Deckschichten 14 aus Faserverbund, welche beidseitig den Wabenkern 12 verschließen und diesen verstärken. Zwischen den Deckschichten 14 und dem Wabenkern 12 ist jeweils eine Trenn- oder Sperrschicht 16 angeordnet. Durch die Sperrschicht 16 wird während der Herstellung des Sandwich-Bauteils 10 ein ungewolltes Eindringen von unausgehärtetem Matrixmaterial in die leeren und zur Deckschicht hin offenen Zellen 18 des Wabenkerns 12 verhindert. Fig.1 zeigt weiterhin, beidseitig zwischen der Sperrschicht 16 und dem Wabenkern 12, ausgehärtete Klebeschichten 20. Die ausgehärteten Klebeschichten 20 bilden eine Klebeverbindung zwischen Sperrschicht 16 und Wabenkern 12. Wie in Fig.1 gezeigt, umfassen die Klebeschichten 20 keilförmige Fortsätze 21, welche die Sperrschicht 16 zusätzlich, ähnlich wie Winkelstreben, an den Wabenstegen 22 des Wabenkerns 12 anbinden und befestigen. Sowohl die Klebeschicht 20 an sich, wie auch deren Fortsätze 21 sind verhältnismäßig homogen im fertigen Sandwich-Bauteil 10 verteilt, wodurch eine homogene Anbindung zwischen Sperrschicht 16 und Wabenkern 12 erzielt wird. Die Deckschichten 14 hingegen sind jeweils durch deren ausgehärtetes Matrixmaterial direkt an die Sperrschicht 16 und über Letztere an den Wabenkern 12 angebunden.

In der gezeigten Ausführung umfasst der Wabenkern 12 selbst phenolharzimprägnierte Aramid-Fasern (z.B. Nomex® oder Kevlar® erhältlich von Du Pont de Nemours (Deutschland) GmbH), welche mit an sich bekannten Verfahren zu einer im Querschnitt sechseckigen, flächigen, gleichmäßigen Wabenstruktur verarbeitet und zugeschnitten werden. Andere Materialien und Formen für den Wabenkern 12 sind nicht ausgeschlossen. Die Sperrschicht 16 umfasst eine Folie aus einem Thermoplast, vorzugsweise aus Polyvinylfluorid, und ist beidseitig oberflächenbehandelt, um ihre Anbindungseigenschaften an die Klebeschicht 20 und an das Matrixmaterial der Deckschicht 14 zu verbessern. Die verwendete Sperrschicht 16 ist in jedem Falle undurchlässig für das Matrixmaterial der Deckschicht 14 und temperaturbeständig bei Temperaturen, welche über der Aushärtetemperatur des Matrixmaterials liegen (z.B. temperaturbeständig bis 200°C). Als bevorzugte Oberflächenbehandlung für die Folie der Sperrschicht 16 wird eine Plasma- oder Corona-Oberflächenbehandlung zur Erhöhung der Oberflächenrauhigkeit im Mikrostrukturbereich betrachtet. Alternativ, oder in Ergänzung hierzu, kann die Folie der Sperrschicht 16 durch ein Beschichtungsverfahren, bspw. durch Primern, zur Verbesserung der chemischen oder chemisch/physischen Anbindungseigenschaften oberflächenbehandelt sein. Weiterhin ist die Sperrschicht 16 vorzugsweise nur minimal gasdurchlässig, wodurch das Sandwich-Bauteil 10 zusätzlich gegen ein Eindringen von Feuchte geschützt wird. Als Klebeschicht 20 wird ein Klebefilm verwendet, welcher anfänglich zwischen Wabenkern 12 und Sperrschicht 16 angeordnet wird. Bei Verwendung eines Harzes für die Klebeschicht 20, ist dieses vorzugsweise doppelt aushärtbar (siehe weiter unten).

Bei der in Fig.1 gezeigten Ausführung ist die Faserverbund-Deckschicht 14 aus einem Gewebe oder Gelege 24 aus Carbon- oder Glasfasern (CFK, GFK) hergestellt, welche in einem ausgehärteten Matrixmaterial 26 eingebettet sind. In der Ausführung von Fig.1 wurde beispielsweise ein Einkomponenten-Epoxydharzsystem als Matrixmaterial verwendet (z.B. HexFlow® RTM 6 erhältlich von Hexcel Corp. USA). Andere Faser- oder Vliesmaterialien und andere Matrixmaterialien sind jedoch nicht ausgeschlossen.

Erfindungsgemäß hergestellte Bauteile eignen sich besonders aber nicht nur als Strukturbauteile für die Luftfahrt. Einerseits zeichnet sich das Sandwich-Bauteil 10 durch eine geringe Porosität der Faserverbund-Deckschichten 14 aus, d.h. durch einen Porenvolumengehalt geringer als 2,0%. bei Verwendung eines typischen Epoxydharzsystems in einem der weiter unten beschriebenen Verfahren. Bei Anwendung des VAP-Prinzips (siehe unten) ist der Porenvolumengehalt üblicherweise sogar wesentlich geringer als 0,5%. Der Porengehalt kann mittels bekannten Röntgen- oder Ultraschallverfahren zerstörungsfrei geprüft werden. Andererseits zeichnet sich das Sandwich-Bauteil 10 durch eine sehr gute Anbindung zwischen Faserverbund-Deckschicht 14 und dem Wabenkern 12 aus (Fachbegriff: "flatwise tensile strength"), welche sich bspw. darin äußert, das bei Zugbeanspruchungsversuchen für bestimmte Produkttypen kein Bruch in den Schnittstellen Deckschicht-Sperrschicht (14-16) oder Sperrschicht-Wabenkern (16-12) festgestellt wurde, sondern allenfalls ein Bruch des Wabenkerns 12 selbst erzielt wurde. Dies ist dahingehend von Bedeutung, dass sich bei unzureichender Zugfestigkeit des Wabenkerns 12, ohne weiteres ein zugfesterer Wabentyp verwendet werden kann, die Klebeverbindungen jedoch schwieriger zu verbessern sind. Das Sandwich-Bauteil 10 erzielt aufgrund der verbesserten Anbindung zwischen jeweiliger Deckschicht 14 und Wabenkern 12 ein sehr hohes Verhältnis von Festigkeit zu Gewicht.

Mit Versuchsmustern, welche mit dem erfindungsgemäßen Verfahren hergestellt wurden, wurden Zugbeanspruchungsversuche als Stirnzugversuche gemäss der Vorschrift "Airbus Industrie Test Method; Fiber Reinforced Plastics; Flatwise tensile test of composite sandwich panel": AITM 1.0025, Issue 1, October 1994 ausgeführt. Als Versuchsmuster wurden Prüflinge aus einem Sandwich-Bauteil mit folgenden Merkmalen verwendet:
- Wabenkern: Wabentyp Kevlarwabe ECK mit Zellgröße: 3.2 und Raumgewicht: 40 kg/m³;
- Sperrschicht: Polyvinylfluorid (PVF)-Folie, oberflächenbehandelt;
- Klebeschicht: Epoxydharzklebefilm Hysol EA 9695 0.50 PSF K (Hersteller: Henkel Loctite), 2 Lagen pro Seite;
- Deckschicht: Gewebetyp Carbongewebe Twill 2/2, 370 g/m² (z.B. G926 Injektex Gewebe), 6 Lagen pro Seite und Harztyp Hexcel RTM 6.

Bei diesen Zugbeanspruchungsversuchen wurden bei 6 Prüflingen folgende Zugfestigkeitswerte in Richtung quer zu den Schichten ("flatwise") festgestellt: 4,45; 4,57; 3,87; 4,60; 3,82 und 4,26 MPa. Hieraus ergibt sich ein Mittelwert für die Zugfestigkeit quer zu den Schichten ("flatwise tensile strength") von 4,26 MPa.

Im Folgenden anhand der Fig.2-7 bevorzugte Ausführungen von Verfahren zur Herstellung von Sandwich-Bauteilen mit den oben besprochenen Eigenschaften näher beschrieben.

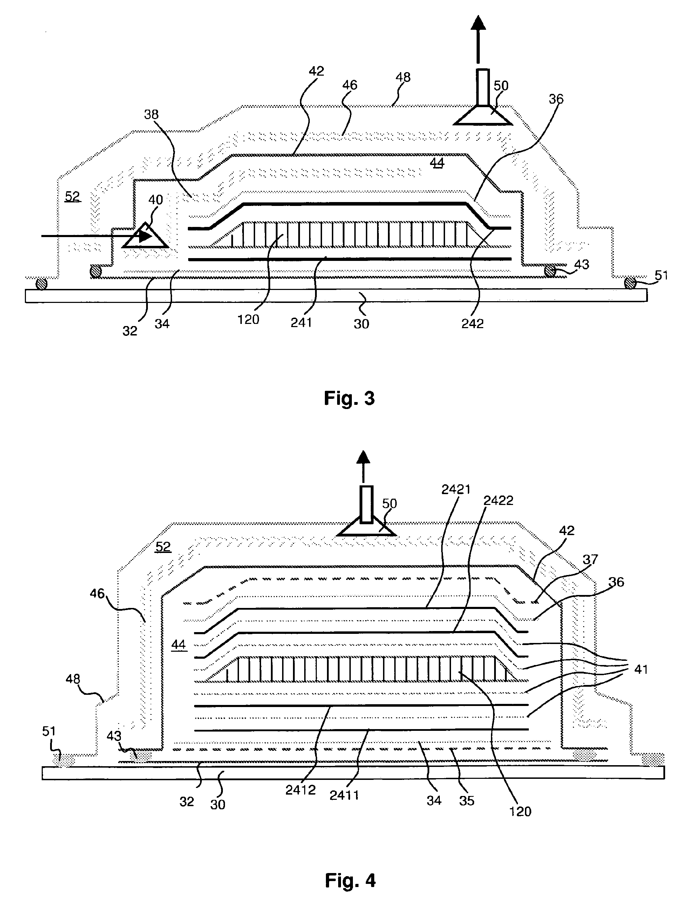

Fig.2 zeigt schematisch einen Aufbau zur Vorbereitung eines Wabenkerns 12 für ein Verfahren gemäss Fig.3 oder Fig.4. Der in Fig.2 gezeigte Wabenkern 12 wird zunächst vorbehandelt im Hinblick auf die spätere Klebeverbindung mit der Sperrschicht 16. Hierzu wird der Wabenkern 12 ca. 2-3 h bei 120°C in einem Trockenofen vorgetrocknet, anschließend zur Reinigung beidseitig ausgeblasen, z.B. mit Stickstoff, und danach mit einem Reinigungsmittel, z.B. mit Aceton, oberflächengereinigt. Zur Vorbereitung gemäss Fig.2, wird ein erster Klebefilm 201 z.B. aus Epoxydharz mit einem Flächengewicht von 50-500 g/m², zugeschnitten und ausgelegt. Dem Klebefilm 201 wird eine geringe Klebrigkeit durch leichtes anwärmen der Oberfläche z.B. mittels Heißluftzufuhr verliehen. Auf dem Klebefilm 201 wird der Wabenkern 12 angeordnet und an den Klebefilm angedrückt. Ein zweiter Klebefilm 202 wird zugeschnitten und in gleicher Weise leicht klebrig auf der Oberseite des Wabenkerns 12 angebracht. Zur Unterstützung der späteren Anbindung an den Wabenkern 12 sowie zur Konturverformung an den Wabenkern 12, kann der mit den Klebefilmen 201, 202 versehene Wabenkern 12 optional unter einem Vakuumsack oder einer Vakuummembranpresse konturgetreu an die Wabenoberfläche vorverformt werden. In bestimmten Fällen wird für jede Klebeschicht 20 jeweils ein Kombination von zwei oder mehr Klebefilmen, insbesondere von verschiedenem Typ, verwendet. Hierdurch lassen sich nicht nur die flächenbezogene Klebstoffmasse, sondern allgemein die Eigenschaften der Klebeschichten 20 gezielt beeinflussen.

Gemäss Fig.2 werden anschließend eine obere und eine untere Folie 161, 162 für die Sperrschichten 16, entsprechend zugeschnitten, auf den Außenseiten der Klebefilme 201, 202 angebracht und auf dem Wabenkern 12 in Position gehalten. Optional kann den Klebefilmen 201, 202 vorangehend eine leichte Klebrigkeit verliehen werden. Um ein späteres, unerwünschtes Ausfließen der Klebeschicht 20 in die Deckschichten 14 (nicht in Fig.2 gezeigt) zu verhindern, sind die Klebefilme 201, 202 kleiner zugeschnitten als die Folien 161, 162. Der Überhang der Folien 161, 162 ist so gewählt, dass geliertes Klebemittel aus den Klebefilmen 201, 202 während dem späteren Aushärtungsprozess maximal bis zum Rand der Folien 161, 162 fließt, nicht jedoch in die Deckschichten 14. Alternativ hierzu könnten die Folien 161, 162 auch umfänglich verschlossen werden, z.B. durch verschweißen. Falls erforderlich, werden die Folien 161, 162 und ggf. die Klebefilme 201, 202 nachträglich wiederholt zugeschnitten. Durch die oben beschriebenen Schritte wird der vorbereitete Wabenkern 12 bereitgestellt. Obwohl ein Wabenkern 12 mit einfacher Oberflächengeometrie abgebildet ist, können prinzipiell beliebige Oberflächenverläufe und Kernformen verwendet werden. Neben dem in Fig.1 abgebildeten Sandwich-Bauteil 10 mit beidseitigen Faserverbund, können auch Sandwich-Bauteile hergestellt werden, welche nur auf einer Seite mit einer Deckschicht aus Faserverbund und auf der gegenüberliegenden Seite mit einem anderen Material verschlossen sind.

Für das weiter unten beschriebene Verfahren ist es von Bedeutung, dass der Waben kern 12 zumindest bis zum An- bzw. Aushärten der Klebeschichten 20 nicht gasdicht verschlossen ist. Bei der in Fig.2 gezeigten Variante, ist der Wabenkern 12 nach dessen Vorbereitung unter anderem dadurch nicht gasdicht verschlossen, dass im Randbereich zwischen den Klebefilmen 201, 202 bzw. zwischen den Folien 161, 162 Gas seitlich entweichen kann. Es kann bei bestimmten Bauteilen erforderlich sein, den Waben kern 12 an sich mit einer Umrandung aus Füllmasse in den Wabenzellen 22 des Randbereichs zu versehen (sogenanntes "Potting"), z.B. zwecks Befestigung des fertigen Sandwich-Bauteils 10 an einer anderen Struktur. Bei umfänglich verschlossenen Folien 161, 162 oder einer gasdichten Umrandung empfehlen sich weiter unten beschriebene Maßnahmen, um zu verhindern, dass der Wabenkern 12 hermetisch abgedichtet ist, insbesondere wenn minimal gasdurchlässige Folien 161, 162 verwendet werden. Alternativ oder zusätzlich hierzu, können auch Folien 161, 162 mit einer gewissen Gasdurchlässigkeit, z.B. mikroporöse Folien 161, 162 verwendet werden, die jedoch auch für das Matrixmaterial 26 der Deckschichten 14 undurchlässig sind. Mit anderen Worten, es werden Mittel oder Maßnahmen vorgesehen welche, zumindest vor dem anschließenden An- bzw. Aushärten der Klebefilme 201, 202, eine verhältnismäßig schnelle und vollständige Entlüftung bzw. Entgasung der Wabenzellen 18 des vorbereiteten Wabenkerns 12 ermöglichen.

Fig.3 zeigt schematisch einen beispielhaften Aufbau zur Ausführung einer ersten Verfahrensvariante (Fachbegriff: "Resin Infusion": RI). In Fig.3 ist der Klarheit halber der Wabenkern, welcher gemäss Fig.2 mit den Klebefilmen 201, 202 und den Sperrschicht-Folien 161, 162 vorbereitet wurde, mit Referenzzeichen 120 bezeichnet. Fig.3 zeigt ein einseitiges Formwerkzeug 30 aus festem, gasdichtem Material, dessen Oberseite der Unterseite des fertigen Sandwich-Bauteils 10 entspricht. Das Formwerkzeug 30 wird anfänglich mit einem Trennmittel behandelt. Auf der Form wird eine erste, untere mikroporöse Membran 32 gemäss dem VAP-Prinzip (z.B. unter Referenz 4144020 von W.L.Gore & Associates GmbH/Deutschland oder unter "VAP Membran" von SAERTEX GmbH & Co. KG/Deutschland erhältlich) ausgelegt. Diese VAP-Membran 32 ist gasdurchlässig, jedoch für flüssiges Matrixmaterial (Harzsystem, siehe 26 in Fig.1) undurchlässig. Auf die Membran 32 wird eine untere Lage Abreißgewebe 34 (Fachbegriff: "peel ply") eines geeigneten Typs abgelegt. Die für die untere Deckschicht 14 benötigten, zugeschnittenen unteren Gewebe- oder Gelegelagen 241 aus trockenem Fasermaterial (z.B. Carbon- oder Glasfasern) werden auf dem Abreißgewebe 34 abgelegt. Auf den Gewebe- oder Gelegelagen 241 wird anschließend der vorbereitete Wabenkern 120 angeordnet. In entsprechender Weise erfolgt die Ablage von oberen Gewebe- oder Gelegelagen 242 für die obere Deckschicht 14 sowie einer oberen Lage Abreißgewebe 36 über dem vorbereiteten Wabenkern 120. Auf das Abreißgewebe 36 wird ein geeignetes Harzverteilermedium 38 angeordnet (z.B. eine Maschenmatte). Auf dem Harzverteilermedium 38 wird eine Harzzuleitung 40, z.B. in Form eines Silikonprofils (Fachbegriff: "Ω-Schlauch") angebracht. Die Harzzuleitung 40 dient der Zuführung von flüssigem Matrixmaterial zu den trockenen Faserlagen 241, 242 (sogenanntes "Resin Infusion" Verfahren). Über dieses Gelege aus vorbereitetem Wabenkern 120, inklusive Klebefilmen 201, 202 und Sperrschicht-Folien 161, 162, dem Faserlagen 241, 242 sowie den Hilfsmitteln wird nun wiederum eine zweite, obere mikroporöse Membran 42, entsprechend der Membran 32, angeordnet. Die obere mikroporöse Membran 42 wird im Randbereich mittels eines geeigneten Dichtbandes 43 vollumfänglich dicht mit der unteren mikroporösen Membran 32 verbunden, so dass ein bezüglich flüssigem Matrixmaterial dichter Teilraum 44 gebildet wird, in welchem das Gelege aus vorbereitetem Waben kern 120, inklusive Klebefilmen 201, 202 und Sperrschicht-Folien 161, 162 und den Faserlagen 241, 242 eingeschlossen ist. Hierzu ist anzumerken, dass, obgleich für die Vorteile des VAP-Verfahrens eine Membran 42 an der Oberseite prinzipiell ausreichen könnte, durch die Membran 32 an der Unterseite des Geleges, neben der Entlüftung, das Fliessverhalten und die Verteilung des Harzes an der Unterseite wesentlich verbessert werden. Als Abstandhalter folgt anschließend ein Vlies oder ein Verteilermedium 46, welches später das gleichmäßige Entlüften bzw. Entgasen unterstützt. Abschließend wird auf der beschriebenen Anordnung ein Vakuumsack 48 aus geeignetem Material (z.B. Silikon) zusammen mit einem Vakuumanschluss 50 angeordnet. Hierbei werden Maßnahmen getroffen (z.B. mittels Faltenwurf), um spätere ungewollte Spannungen auf das Gelege zu verhindern. Der Vakuumsack 48 wird mittels geeignetem Vakuumdichtband 51 (Fachbegriff: "sealant tape") vollumfänglich dicht mit dem Formwerkzeug 30 verbunden. Hierdurch werden der Teilraum 44 sowie der hierin befindliche Gelegeaufbau (241, 120, 242) für das zu fertigende Sandwich-Bauteil 12, in einem gasdichten Raum 52 eingeschlossen, in welchem anhand Vakuumanschlusses 50 ein Vakuum erzeugt werden kann. An den Vakuumanschluss 50 wird hierzu eine nicht abgebildete Vakuumpumpe angeschlossen. Es wird beim Aufbau und insbesondere beim verwendeten Vakuumsack 48 und Vakuumdichtband 51 sichergestellt, dass ein Vakuum <1 mbar mit einer geeigneten Vakuumpumpe im Raum 52 längerfristig aufrechterhalten werden kann. Das Formwerkzeug 30 mit dem oben beschriebenen Aufbau kann anschließend zu weiter unten beschriebenen Verfahrensschritten z.B. in einem Ofen gestellt werden.

Fig.4 zeigt schematisch einen beispielhaften Aufbau zur Ausführung einer alternativen, zweiten Verfahrensvariante (Fachbegriff: "Resin Film Infusion" RFI). Der Aufbau gemäss Fig.4 ist prinzipiell analog zu jenem aus Fig.3. Gleiche oder ähnliche Elemente sind in Fig.4 mit gleichen Bezugszeichen wie in Fig.3 versehen und werden nicht wiederholt beschrieben.

Im Unterschied zur Variante gemäss Fig.3, erübrigen sich beim Aufbau gemäss Fig.4 die Komponenten für die Flüssigharzzufuhr, sowie die Harzverteilermedien. Dies wird ermöglicht dadurch, dass als Quelle für das Matrixmaterial leicht fließfähige Harzfilme 41 aus ungehärtetem Harz verwendet werden, welche anfänglich im Gelege, direkt zwischen verschiedene trockene Gewebe- oder Gelegelagen 2411, 2412 bzw. 2421, 2422 für die obere bzw. untere Decksicht 14 und/oder zwischen die innerste Gewebe- oder Gelegelagen 2412, 2422 und den vorbereiteten Wabenkern 120, abgelegt werden. Es können zusätzlich unter das untere Abreißgewebe 34 und auf das obere Abreißgewebe 36, noch entsprechende Trennfilme 35, 36 gelegt werden. Auch beim Aufbau gemäss Fig.4 wird später, mittels einer Vakuumpumpe (nicht abgebildet) über den Vakuumanschlusses 50, ein Vakuum im gasdichten Raum 52 hergestellt.

Durch die, in Fig.4 illustrierte Verwendung von Harzfilmen 41 (RFI) anstelle einer Zufuhr von Flüssigharz (RI), kann eine direkte Harzinfusion auf kleinstem Raum in die Gewebe- oder Gelegelagen 2411, 2412 bzw. 2421, 2422 stattfinden. Hierzu werden die Harzfilme unter Wärmeeinwirkung verflüssigt. Zu den Vorteilen der Verwendung von Harzfilmen 41 zählen die Möglichkeit das Harz/Faser-Verhältnis definiert, insbesondere mit einer geringeren Schwankungsbreite, einstellen zu können aber auch eine Reduzierung des Harzabfalls (welcher beim RI-Verfahren z.B. im Verteilermedium und in den Schlauchleitungen anfällt).

Zu Fig.3 und Fig.4 bleibt anzumerken, dass es sich um beispielhafte schematische Abbildungen handelt. Der tatsächliche Aufbau des Geleges (Fachbegriff: "lay-up") sowie Typ und Form des verwendeten Wabenkerns sind natürlich bauteilabhängig.

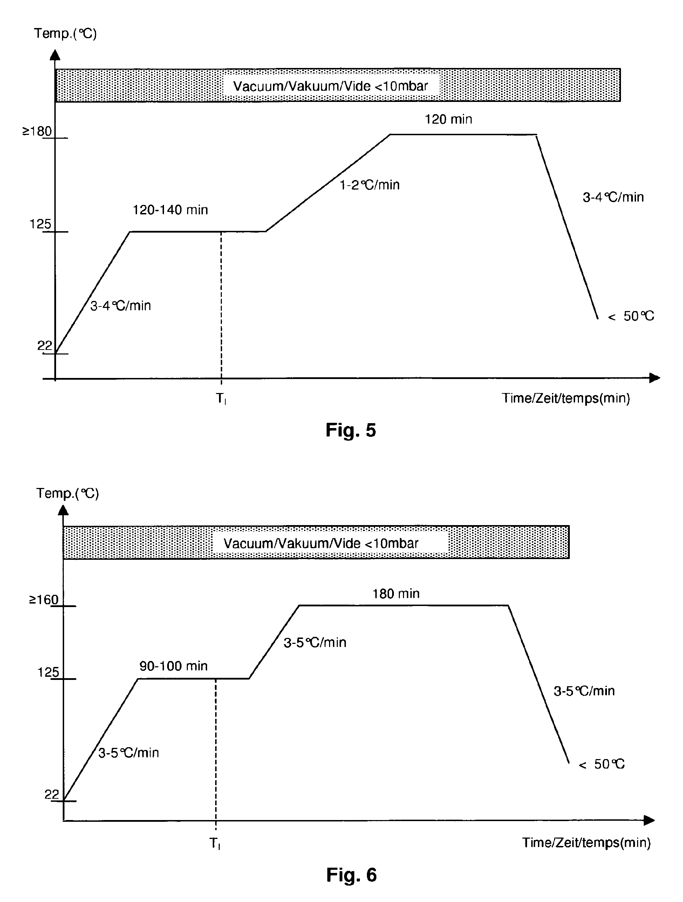

Anhand der Fig.5-7 werden nun einige Beispiele zum weiteren Verfahrensablauf für einen Aufbau gemäss Fig.3 beschrieben.

Beispiel 1 (Fig.5)

Das Temperatur-Zeitdiagramm gemäss Fig.5 illustriert die Verfahrensschritte bei Verwendung eines der folgenden Einkomponenten-Epoxydharze als Matrixmaterial für die Herstellung der Faserverbund-Deckschichten 14: "RTM 6" (erhältlich von der Firma Hexcel), "Cycom 977-2" (erhältlich von der Firma Cytec) oder "EPS 600" (erhältlich von der Firma Bakelite). Bei diesen Harzen handelt es sich um Strukturharze, welche für Faserverbund-Strukturbauteile für die Luftfahrtindustrie zugelassen sind.

Ein Aufbau gemäss Fig.3 wird zunächst in einen einfachen Ofen mit Temperaturregelung eingebracht und über den Vakuumanschluss 50 an eine Vakuumpumpe angeschlossen. Wie aus Fig.5 hervorgeht, wird das Vakuum im geschlossenen Raum 52, und aufgrund der gasdurchlässigen, mikroporösen Membranen 32, 42 auch im Zwischenraum 44 hergestellt, bevor eine Temperaturerhöhung stattfindet. Hierdurch wird sichergestellt, dass das Aus- bzw. Anhärten der Klebeschicht 20 (Klebefilme 201, 202) zwischen Wabenkern 12 und Sperrschicht 16 erst stattfindet, nachdem die Wabenzellen 18 diesem Vakuum ausgesetzt wurden, so dass die Wabenzellen 18 zumindest teilweise evakuiert sind, bevor sie durch die Sperrschicht 16 (und die ausgehärteten Klebefilme 201, 202) verschlossen werden. Nachdem das Vakuum erzeugt wurde, wird die Temperatur im Ofen mit einer Steigung der Temperaturkurve von ca. 3-4°C/min auf eine erste Prozesstemperatur von ca. 125°C erhöht. Anschließend wird bei dieser Temperatur die jeweilige Klebeschicht 20 (Klebefilme 201, 202) zwischen Wabenkern 12 und Sperrschicht 16 unter Wärmeeinwirkung ausgehärtet, während eines Zeitintervalls von ca. 120-140 Minuten. Es ist anzumerken, dass vor der vollständigen Aushärtung der Klebeschichten 20, ein größtmögliches Entlüften der Wabenzellen 18 stattgefunden hat. Wenn die Klebeschichten 20 ausgehärtet sind, wird zu einem Zeitpunkt T, bei gleichbleibender Temperatur im Ofen die Zufuhr vom flüssigen Matrixmaterial, (in diesem Beispiel RTM 6; Cycom 977-2 oder EPS 600) eingeschaltet. Das Harz ist hierbei auf eine Temperatur angewärmt, die diesem genügend Fliessfähigkeit bzw. Viskosität verleiht, z.B. auf 80°C. Nachdem das Harz sich durch Vakuuminfusion in den zu tränkenden, anfänglich trockenen Faserschichten gleichmäßig verteilt hat, wird die Temperatur im Ofen mit einer Anstiegsrate von ca. 1-2°C/min auf eine zweite Prozesstemperatur von ca. 180°C erhöht. Die jeweilige Sperrschicht 16 verhindert hierbei ein unerwünschtes Eindringen von Matrixmaterial in die Wabenzellen 18. Während einer Dauer von ca. 120 Minuten wird nun das Harz ausgehärtet. Anschließend wird mit einer Abfallrate von ca. 3-4°C/min der Aufbau wieder auf Raumtemperatur abgekühlt. Wie aus Fig.5 hervorgeht, wird das Gelege während des gesamten Ofenprozesses, und insbesondere bereits vor dem An- bzw. Aushärten der Klebeschichten 20, mit Vakuum beaufschlagt.

Beispiel 2 (Fig.6)

Das Temperatur-Zeitdiagramm gemäss Fig.6 illustriert die Verfahrensschritte bei Verwendung eines der folgenden Epoxy-Diisocyanurat-Harze als Matrixmaterial für die Herstellung der Faserverbund-Deckschichten 14: Blendur® 4520 oder Blendur® 4516 oder Mischungen hiervon (erhältlich von der Firma BAYER Material Science) oder Harzsystem P15 bzw. P30 (erhältlich von der Firma LONZA). Zu den Blendur® Harzsystemen (ca. 80% Diphenylmethandiisocyanat und 20% Epoxydharz auf Basis von Bisphenol A) und geeigneten Mischungen hiervon bzw. hiermit ist anzumerken, dass diese aufgrund ihrer flammhemmenden Eigenschaften für Strukturbauteile (z.B. Tragflächenelemente) und insbesondere für die Innenraumausstattung (Fachbegriff "Interior-Bauteile") im Luftfahrzeugbau geeignet sind. Weiterhin eignen sich Polyisocyanurat-Harze, aufgrund ihrer allgemeinen Verarbeitungseigenschaften aber insbesondere ihrer Viskositätscharakteristik, besonders gut für die Infusionstechnik des erfindungsgemäßen Verfahrens.

Auch bei diesem Beispiel wird zunächst ein Aufbau gemäss Fig.3 in einen einfachen Ofen mit Temperaturregelung eingebracht. Über den Vakuumanschluss 50 und eine Vakuumpumpe wird ebenfalls das Vakuum im geschlossenen Raum 52 und im Zwischenraum 44 hergestellt, bevor eine Temperaturerhöhung stattfindet. Nach einer Temperaturerhöhung mit einer Steigung von ca. 3-5°C/min und nachdem ein Entlüften der Wabenzellen 18 bereits stattgefunden hat, werden die Klebeschichten 20 (Klebefilme 201, 202) bei einer ersten Prozesstemperatur von ca. 125°C ausgehärtet. Anschließend wird angewärmtes flüssiges Harz unter Vakuumeinwirkung in die Faserlagen 241, 242, infusioniert. Nach einer Temperaturerhöhung mit einer Steigung von ca. 3-5°C/min, wird das Harz bei einer zweiten Prozesstemperatur von ca. 160°C während ca. 180 Minuten ausgehärtet. Anschließend wird der Aufbau bei einer Abkühlrate von ca. 3-5°C auf Raumtemperatur abgekühlt. Somit wird auch bei diesem Beispiel das Gelege bereits vor dem An- bzw. Aushärten der Klebeschichten 20 mit Vakuum beaufschlagt.

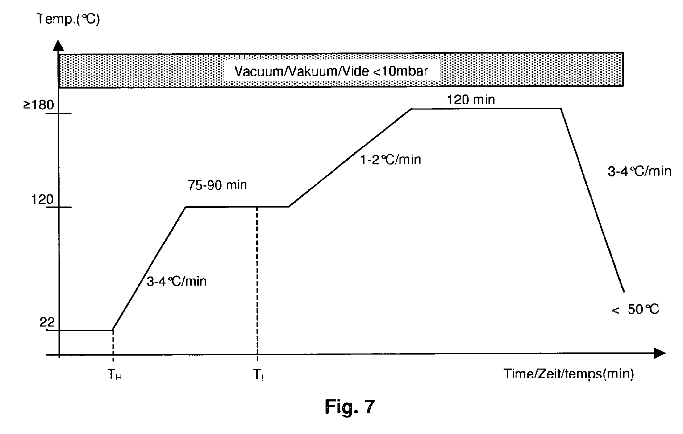

Beispiel 3 (Fig.7)

In Beispiel 3 können die gleichen Harzsysteme verwendet werden wie in Beispiel 1. Die Verfahrensschritte von Beispiel 3 entsprechen grösstenteils jenen gemäss Fig.3, wobei jedoch das für die Klebeschichten verwendete doppelt aushärtbare Harz bei leicht niedrigerer erster Pozesstemperatur von ca. 120°C während einer geringeren Zeitspanne von ca. 75-90 Minuten nur angehärtet und nicht vollständig ausgehärtet wird. Es hat sich herausgestellt, dass eine genügende Dichtheit der Wabenzellen 18 gegenüber dem flüssigen Matrixmaterial bereits gewährleistet ist, bevor die Klebeschichten 20 vollständig ausgehärtet sind. Es lassen sich somit Energie und Ofenbelegungszeit einsparen, da das doppelt aushärtbare Harz (Klebefilme 201, 202), während dem ohnehin notwendigen anschließenden Aushärten des Harzes der Deckschichten 14 vollständig aushärten kann. Weiterhin unterscheidet sich das Beispiel von Fig.3 dahingehendend, dass das Gelege bereits während einer Verweildauer T_{H} mit Vakuum beaufschlagt wird, bevor die Temperaturerhöhung zur Anhärtung der Klebeschichten 20 eingeleitet wird. Ein entsprechendes Intervall T_{H} kann z.B. bei größeren Bauteilen, oder bei Wabenkernen mit größerem Zellvolumen eine maximale Entlüftung bzw. Entgasung der Wabenzellen sicherstellen.

Als Material für die Klebefilme 161, 162 wird in allen Beispielen ein Harz verwendet, z.B. ein Epoxydharz oder ein Phenolharz oder eine geeignete Mischung hiervon, welches bei den beiden verschiedenen Prozesstemperaturen aushärtbar ist ("doppelt aushärtbar"), so dass die Klebeschicht 20 keinen Schaden nimmt durch Übertemperieren bei einer höheren Aushärtetemperatur für das einbettende Matrixmaterial 26. Zusätzlich wird an das verwendete Harz die Forderung gestellt, mit den Sperrschicht-Folien 161, 162 und natürlich dem Wabenkern 12 kompatibel zu sein.

Die Verweilzeit Tₗ bei der ersten Prozesstemperatur zum Aus- bzw. Anhärten der Klebeschicht 20 ist immer so gewählt, dass vor der Infusion der Faserlagen 241, 242 mit dem flüssigen Matrixmaterial, die Wabenzellen 18 bezüglich Matrixmaterial dicht verschlossen sind, so dass kein Matrixmaterial ungewollt in die Wabenzellen 18 eindringen kann.

Betreffend die Sperrschicht 16 (Folien 161, 162), die zwingend für Matrixmaterial undurchlässig ist, ist es prinzipiell für die oben beschriebene Entlüftung der Wabenzellen 18 von Vorteil, wenn die Sperrschicht 16 an sich eine gewisse, minimale Gasdurchlässigkeit aufweist. So ist es denkbar, auch für die Sperrschicht 16 eine geeignete mikroporöse Membran zu verwenden. Andererseits steht diese Forderung dem Ziel entgegen, den Wabenkern 12 des fertigen Sandwich-Bauteils 10 möglichst hermetisch zu versiegeln, um eine ungewünschte Ansammlung von Feuchtigkeit in den Waben zellen 18 längerfristig zu verhindern. Um letzteres Ziel zu erreichen, sollte die Sperrschicht 16 eine möglichst geringe Gasdurchlässigkeit aufweisen. Es ist hier also ein Kompromiss zu treffen. Nebst der oben beschriebenen oberflächenbehandelten Folie 161, 162 aus Thermoplast sind eine Vielzahl anderer Materialien für die Sperrschicht 16 denkbar. Wenn eine technisch gas-undurchlässige Sperrschicht 16 verwendet wird, sind Maßnahmen vorzusehen, um eine genügende Entlüftung des Wabenkerns 12, zumindest vor dem An- bzw. Aushärten der Klebeschichten 20, (wie weiter unten beschrieben) zu gewährleisten. Dies gilt insbesondere, wenn Wabenzellen 18 am Umfang des Wabenkerns 12 mit einer Kernfüllmasse befüllt sind (Fachbegriff: "potting"), so dass auch seitlich Gas nur schwer aus dem Wabenkern 12 entweichen kann. Es können beispielsweise zur Entlüftung des Wabenkerns 12 spezielle Mittel vorgesehen werden. Es können seitlich im Randbereich des Wabenkerns 12 selbst oder aber im Potting-Rand Entlüftungslöcher angebracht oder Entlüftungsöffnungen vorgesehen sein. Alternativ oder in Ergänzung hierzu können, quer zu den Sandwich-Schichten, an bestimmten Stellen in der Sperrschicht 16, nur in einer oder in beiden Sperrschichten 16 versetzt oder durchgehend, Entlüftungslöcher vorgesehen werden. Nur die den Entlüftungslöcher entsprechenden Wabenzellen 18 füllen sich während der Infusion mit Harz, und können später z.B. als Befestigungspunkte im fertigen Bauteil 10 dienen. Solche Entlüftungsmittel können insbesondere bei großen Bauteilen, die Prozessdauer verkürzen, da der Wabenkern 12 schneller entlüftet werden kann.

Beim erfindungsgemäßen Verfahren kommt dem dauerhaft angelegten Vakuum eine mehrfache Funktion zu. Durch das Herstellen des Vakuums vor dem Aus- bzw. Anhärten der Klebeschichten 20 werden die Wabenzellen 18 anfänglich zumindest teilweise evakuiert. Hierdurch wird einerseits eine homogenere Anbindung der jeweiligen Deckschicht 16 an den Wabenkern ermöglicht, wodurch diese Klebeverbindung verbessert wird, und andererseits wird eine nachträgliche Diffusion von Gasen aus den Wabenzellen in das aushärtende Matrixmaterial der jeweiligen Deckschicht 14 im weiteren Verfahrensverlauf weitestgehend verhindert, wodurch eine Verringerung der Porosität dieses Faserverbunds gewährleistet wird. Durch das Aufrechterhalten des Vakuums während dem Aus- bzw. Anhärten der Klebeschichten 20 wird die Sperrschicht 16 gleichmäßig an den Wabenkern 12 angepresst und Gase, welche sich aus dem aus- bzw. anhärtenden Klebematerial bilden, werden weitestgehend abgeführt, sowohl aus den Klebeschichten 20, wie auch aus den Wabenzellen 18. Durch das Entgasen der Klebeschichten 20 während der Aushärtung wird die Qualität der Klebeverbindung zusätzlich verbessert. Durch das, während der anschließenden Vakuum-unterstützten Matrixmaterialinfusion und der anschließenden Aushärtung des Matrixmaterials weiterhin anliegende Vakuum, wird in für RI und RFI-Verfahren bekannter Art, die Bildung von Luft- bzw. Gaseinschlüssen und eine daraus resultierende Porenbildung im Faserverbund allgemein reduziert. Unterstützend hierauf wirkt die oben erwähnte anfängliche Evakuierung der Wabenzellen 18. Bei Verwendung der mikroporösen Membran 32, 42 gemäss dem VAP-Verfahren, wird einerseits eine möglichst flächige, gleichmäßige und schnelle anfängliche Entlüftung der Wabenzellen 18 sowie der Klebeschicht 20 und ebenfalls eine flächige, gleichmäßige Entlüftung des Matrixmaterials in Querrichtung zur Bauteiloberfläche ermöglicht. Obwohl das VAP-Verfahren aufgrund verbesserter Resultate als bevorzugt zu betrachten ist, kann das erfindungsgemäße Verfahren prinzipiell auch ohne die mikroporösen Membranen 32, 42, gemäss klassischen Vakuuminfusionsverfahren (RI, RFI ohne VAP) ausgeführt werden.

Wie aus obigen Beispielen ersichtlich, können prinzipiell zahlreiche Matrixmaterialien 26 für die Deckschichten 14 verwendet werden, z.B. ein Epoxydharz, ein Cyanuratharz, ein Polyesterharz, ein Phenolharz, ein Vinylesterharz, ein Acrylharz, ein Silan oder ein Gemisch aus mindestens zwei dieser Harze, da diese Harze vergleichsweise schnell aushärten und gut verarbeitbar sind. Es sollte jedoch, bei Verwendung einer mikroporösen Membran (32, 42) gemäss dem VAP-Verfahren auf Kompatibilität zwischen dieser Membran (32, 42) und dem Matrixmaterial 26 geachtet werden. Auch das trockene Fasermaterial 24 lässt sich prinzipiell in verschiedensten Ausgangsformen verwenden, z.B. in Form eines Gewebes, eines Geleges, eines Geflechts, eines Gewirks, eines Gestricks, eines Vlies oder eines Hybridmaterials. Die verwendete Form des Fasermaterials sollte vom flüssigen Matrixmaterial gleichmäßig durchtränkt werden können und nach dem Aushärten des Matrixmaterials, je nach verwendeter Systemkombination, eine ausgezeichnete mechanische Festigkeit bei gleichzeitig hervorragenden elastischen Eigenschaften aufweisen. Als Fasermaterial werden hierzu vorzugsweise Materialien verwendet, die Glasfasern, Carbon-Fasern, Borfasern, Aramid-Fasern, Keramik-Fasern, Metall-Fasern und/oder Metalldrähte aufweisen. Alternativ oder in Kombination hierzu können als Fasermaterial auch Materialien eingesetzt werden, welche auf thermoplastischen Kunststoffen oder Elastomeren basieren. Der Wabenkern 12 an sich kann ebenfalls, je nach Anwendung des Sandwich-Bauteils 10, mit unterschiedlichem spezifischen Gewicht und aus verschiedenen Materialen hergestellt sein. Als Material für die Waben kann Papier, Pappe, ein Fasermaterial oder eine Kombination hiervon verwendet werden. Solche Wabenstrukturen weisen ein besonders hohes Verhältnis von Festigkeit zu Gewicht auf. Bevorzugt sind Wabenstrukturen aus Papier oder Pappe, bei denen das Papier- oder Pappmaterial mit Aramid-Fasern, insbesondere Nomex®-Fasern oder Kevlar®-Fasern, Polyesterfasern, PVC-Fasern Polyacrylfasern, Polypropylenfasern oder einem Gemisch aus mindestens zwei dieser Faserarten ergänzt ist. Die Wabenstrukturen können zusätzlich mit Harz getränkt sein. Die Wabenstruktur kann allerdings auch aus dünnen Metallfolien, vorzugsweise aus Aluminium, oder aber aus einem Kunststoffmaterial hergestellt sein.

## Patentansprüche

1. Verfahren zur Herstellung eines Sandwich-Bauteils (10) mit einem Wabenkern (12), dessen Waben (18) beidseitig verschlossen sind und dies zumindest einseitig mittels einer Deckschicht (14) aus in Matrixmaterial (26) eingebettetem Fasermaterial (24), wobei das Verfahren folgende Schritte umfasst.
Herstellen eines Geleges umfassend den Wabenkern (12), sowie zumindest einseitig auf dem Wabenkern (12), von Innen nach Außen, eine aushärtbare Klebeschicht (20; 201, 202) auf der Außenseite des Wabenkerns (12), eine Sperrschicht (16; 161, 162) und eine Faserschicht (24; 241, 242; 2411, 2412, 2421, 2422);
Einschließen des Geleges auf einem einseitigen Formwerkzeug (30) in einen gasdichten Raum, welcher mittels einer Vakuumfolie (48) auf dem einseitigen Formwerkzeug gebildet wird;
Erzeugen eines Vakuums in diesem gasdichten Raum;
nach dem Erzeugen des Vakuums, Aus- bzw. Anhärten der Klebeschicht (20; 201, 202) zwischen Wabenkern (12) und Sperrschicht (16; 161, 162) unter diesem Vakuum, so dass die Wabenzellen zumindest teilweise evakuiert sind bevor sie durch die Sperrschicht (16; 161, 162) verschlossen werden;
nach dem Aus- bzw. Anhärten der Klebeschicht (20; 201, 202), Infusion der Faserschicht (24; 241; 242; 2411; 2412; 2421; 2422) unter Vakuum mit einem Matrixmaterial (26); und
Aushärten des Matrixmaterials (26) unter Vakuum

2. Verfahren nach Anspruch 1, weiterhin umfassend:
Einschließen des Geleges in einen bezüglich Matrixmaterial dichten Teilraum mittels einer mikroporösen Membran (32, 42), welche für Matrixmaterial undurchlässig und für Gase durchlässig ist, wobei die mikroporöse Membran welche das Gelege einschließt anschließend mittels der Vakuumfolie auf dem einseitigen Formwerkzeug in den gasdichten Raum eingeschlossen wird.

3. Verfahren nach einem der Ansprüche 1 oder 2, wobei die Infusion der Faserschicht ein Tränken des Fasermaterials mittels flüssigem Matrixmaterial umfasst, welches von Außen dem Gelege zugeführt wird.

4. Verfahren nach einem der Ansprüche 1 oder 2, wobei die Infusion der Faserschicht ein Tränken des Fasermaterials anhand von verflüssigtem Matrixmaterial aus einem oder mehreren, zum Gelege gehörenden Matrixmaterial-Filmen (41) umfasst.

5. Verfahren nach einem der Ansprüche 1 bis 4, wobei als Sperrschicht (16;161, 162) eine Folie verwendet wird, welche oberflächenbehandelt ist, vorzugsweise durch eine Plasma- oder Corona- Oberflächenbehandlung, durch ein Beschichtungsverfahren oder durch eine Kombination hiervon

6. Verfahren nach einem der vorangehenden Ansprüche, wobei die Verweildauer (T_{I}) des Geleges unter Vakuum und/oder die Steigung der Temperaturkurve vor dem Aus- bzw. Anhärten der Klebeschicht unter Wärmeeinwirkung derart gewählt ist, dass eine Evakuierung der Wabenzellen erzielt wird, welche zumindest annähernd dem erzeugten Vakuum entspricht, bevor die Klebeschicht an- bzw. ausgehärtet ist.

7. Verfahren nach einem der vorangehenden Ansprüche, wobei ein Vakuum von ≤ 10mbar, vorzugsweise ≤1 mbar erzeugt wird.

8. Verfahren nach einem der vorangehenden Ansprüche, wobei das Aus- bzw Anhärten der Klebeschicht durch Wärmeeinwirkung bei einer ersten Prozesstemperatur ausgeführt wird, welche niedriger ist als eine zweite Prozesstemperatur beim Aushärten des Matrixmaterials und wobei als Klebeschicht ein Klebefilm auf Basis von einem Epoxydharz oder einem Phenolharz oder einem Gemisch hiervon verwendet wird, welcher im Bereich von der ersten und der zweiten Prozesstemperatur aushärtbar ist

9. Sandwich-Bauteil (10) erhalten durch ein Verfahren gemäss einem der Ansprüche 1-8, umfassend einen Wabenkern (12), dessen Waben (18) beidseitig verschlossen sind, mindestens eine Deckschicht (14) aus in Matrixmaterial (26) eingebettetem Fasermaterial (24), welche den Wabenkern (12) einseitig verschließt, und eine Sperrschicht (16; 161, 162) zwischen dem Wabenkern und der Deckschicht,
**dadurch gekennzeichnet, dass**
die Deckschicht (14) einen Porenvolumengehalt ≤ 2% aufweist; und mit dem Sandwich-Bauteil (10) eine Zugfestigkeit senkrecht zu den Sandwich-Schichten von ≥ 3MPa, beziehungsweise in einem Zugversuch, bei einer Eigenzugfestigkeit des Wabenkerns von < 3MPa, ein Wabenbruch erzielt wird.

10. Sandwich-Bauteil nach Anspruch 9, welches eine Zugfestigkeit von mindestens 1,5MPa senkrecht zu den Sandwich-Schichten aufweist.

11. Sandwich-Bauteil nach Anspruch 9 oder 10, erhalten durch ein Verfahren gemäss Anspruch 2, wobei die Deckschicht einen Porenvolumengehalt < 0,5% aufweist.

## Claims

1. A method for manufacturing a sandwich component (10) with a honeycomb core (12), the webs (18) of which are closed on both sides and this at least on one side by means of a cover layer (14) made of a fiber material (24) embedded in a matrix material (26), the method comprising the following steps:
manufacturing a lay-up comprising the honeycomb core (12), as well as at least on one side on the honeycomb core (12) from the inside to the outside, a curable adhesive layer (20; 201, 202) on the outside of the honeycomb core (12), a barrier layer (16; 161, 162) and a fiber layer (24; 241, 242; 2411, 2412. 2421, 2422);
confining the lay-up on a one-sided moulding tool (30) in a gas-tight space, which is formed by means of a vacuum sheet (48) on the one-sided moulding tool;
producing a vacuum in this gas-tight space;
after producing the vacuum, complete or partial curing of the adhesive layer (20; 201, 202) between the honeycomb core (12) and the barrier layer (16; 161, 162) under this vacuum, so that the honeycomb cells are at least partly evacuated before they are closed by the barrier layer (16; 161, 162);
after complete or partial curing of the adhesive layer (20; 201, 202), infusing the barrier layer (24; 241, 242; 2411, 2412, 2421, 2422) under vacuum with a matrix material (26); and
curing the matrix material (26) under vacuum

2. The method according to claim 1, further comprising:
confinement of the lay-up in a partial space sealed with regard to matrix material by means of a microporous membrane (32, 42) which is impervious for matrix material and pervious for gases, the microporous membrane which confines the lay-up being subsequently confined by means of the vacuum sheet on the one-sided moulding tool in the gas-tight space

3. The method according to any of claims 1 or 2, wherein the infusion of the fiber layer comprises an impregnation of the fiber material by means of liquid matrix material, which is fed to the lay-up from the outside

4. The method according to any of claims 1 or 2, wherein the infusion of the fiber layer comprises an impregnation of the fiber material by means of matrix material liquefied out of one or more matrix material films (41) belonging to the lay-up

5. The method according to any of claims 1 to 4, wherein a sheet which is surface-treated, preferably by a plasma or corona surface treatment, by means of a coating method, by a combination thereof, is used as a barrier layer (16; 161, 162).

6. The method according to any of the preceding claims, wherein the dwelling time (T_{I}) of the lay-up under vacuum and/or the gradient of the temperature curve before the complete or partial curing of the adhesive layer under the effect of heat are selected so that an evacuation of the honeycomb cells is achieved, which corresponds at least approximately to the produced vacuum, before the adhesive layer is partially or completely cured

7. The method according to any of the preceding claims, wherein a vacuum of ≤ 10mbar, preferably ≤ 1mbar is produced

8. The method according to any of the preceding claims, wherein the complete or partial curing of the adhesive layer is performed by the effect of heat at a first process temperature, which is lower than a second process temperature for the curing of the matrix material and wherein as an adhesive layer, an adhesive film based on an epoxy resin or a phenolic resin or a mixture thereof is used, which is curable in the range of the first and of the second process temperature

9. A sandwich component (10) obtained by a method according to any of claims 1 to 8, comprising a honeycomb core (12), the webs of which (18) are closed on both sides, at least one cover layer (14) made of a fiber material (24) embedded in a matrix material (26), which closes the honeycomb core (12) on one side and a barrier layer (16; 161, 162) between the honeycomb core and the cover layer,
**characterized in that**,
the cover layer (14) has a pore volume content ≤ 2%; and in a tensile test with the sandwich component (10), a tensile strength perpendicular to the sandwich layers of ≥ 3MPa is obtained, respectively, a honeycomb failure being obtained for an intrinsic tensile strength of the honeycomb core of < 3MPa

10. The sandwich component according to claim 9, which has a tensile strength of at least 15MPa perpendicularly to the sandwich layers

11. The sandwich component according to claim 9 or 10, obtained by a method according to claim 2, wherein the cover layer has a pore volume content < 0.5%

## Revendications

1. Procédé pour la fabrication d'un composant sandwich (10) avec un noyau en nid d'abeilles (12), dont les alvéoles (18) sont fermées des deux côtés et ceci au moins d'un côté au moyen d'une couche de recouvrement (14) à base de matériau fibreux (24) noyé dans du matériau matriciel (26), le procédé comprenant les étapes suivantes:
fabrication d'un assemblage comprenant le noyau en nid d'abeilles (12), et au moins d'un côté sur le noyau en nid d'abeilles (12), de l'intérieur vers l'extérieur, une couche adhésive (20 ; 201, 202) durcissable sur le côté extérieur du noyau en nid d'abeilles (12), une couche de blocage (16 ; 161, 162) et une couche fibreuse (24 ; 241, 242 ; 2411, 2412, 2421, 2422) ;
enfermement de l'assemblage sur un outil de formage (30) unilatéral dans un espace étanche au gaz, qui est formé au moyen d'un film à vide (48) sur l'outil de formage unilatéral ;
production d'un vide dans cet espace étanche au gaz ;
après la production du vide, durcissement complet respectivement durcissement partiel de la couche adhésive (20 ; 201, 202) entre le noyau en nid d'abeilles (12) et la couche de blocage (16 ; 61, 162) sous ce vide, de sorte que les alvéoles sont mises sous vide au moins en partie avant d'être enfermées par la couche de blocage (16 ; 161, 162) ;
après le durcissement complet respectivement le durcissement partiel de la couche adhésive (20 ; 201, 202), infusion de la couche fibreuse (24 ; 241, 242 ; 2411, 2412, 2421, 2422) sous vide avec un matériau matriciel (26) ; et
durcissement du matériau matriciel (26) sous vide.

2. Procédé selon la revendication 1, comprenant en outre :
enfermement de l'assemblage dans un espace partiel étanche par rapport au matériau matriciel au moyen d'une membrane (32, 42) microporeuse, qui est imperméable pour le matériau matriciel et perméable pour des gaz, la membrane microporeuse, qui enferme l'assemblage, étant enfermée ensuite au moyen du film à vide sur l'outil de formage unilatéral dans l'espace étanche au gaz

3. Procédé selon l'une quelconque des revendications 1 ou 2, l'infusion de la couche fibreuse comprenant une imprégnation du matériau matriciel au moyen de matériau matriciel liquide, qui est amené par l'extérieur à l'assemblage

4. Procédé selon l'une quelconque des revendications 1 ou 2, l'infusion de la couche fibreuse comprenant une imprégnation du matériau fibreux à l'aide de matériau matriciel liquéfié provenant d'un ou de plusieurs films de matériau matriciel (41) appartenant à l'assemblage

5. Procédé selon l'une quelconque des revendications 1 à 4, un film étant utilisé comme couche de blocage (16; 161, 162) ; lequel film est traité en surface, de préférence par un traitement superficiel plasma ou un traitement superficiel corona, par un procédé d'enduction ou par une combinaison de ces derniers

6. Procédé selon l'une quelconque des revendications précédentes, la durée de séjour (T_{I}) de l'assemblage sous vide et/ou la pente de la courbe de température avant le durcissement complet ou le durcissement partiel de la couche adhésive sous l'effet de la chaleur étant choisie de telle sorte qu'une mise sous vide des alvéoles est obtenue, laquelle correspond au moins approximativement au vide généré avant que la couche adhésive soit partiellement durcie ou soit complètement durcie

7. Procédé selon l'une quelconque des revendications précédentes, un vide ≤ 10 mbar, de préférence ≤ 1 mbar, étant généré.

8. Procédé selon l'une quelconque des revendications précédentes, le durcissement complet respectivement le durcissement partiel de la couche adhésive étant effectué par l'effet de chaleur à une première température de processus, laquelle est inférieure à une seconde température de processus lors du durcissement complet du matériau matriciel et un film adhésif à base d'une résine époxy ou d'une résine phénolique ou d'un mélange de celles-ci étant utilisé comme couche adhésives, lequel mélange peut durcir complètement dans la plage de la première et de la seconde températures de processus

9. Composant sandwich (10) obtenu par un procédé selon l'une quelconque des revendications 1 à 8, comprenant un noyau en nid d'abeilles (12), dont les alvéoles (18) sont fermés des deux côtés, au moins une couche de recouvrement (14) à base de matériau fibreux (24) noyé dans du matériau matriciel (26), laquelle couche ferme le noyau en nid d'abeilles (12) sur un côté, et une couche de blocage (16 ; 161, 162) entre le noyau en nid d'abeilles et la couche de recouvrement,
**caractérisé en ce que**
la couche de recouvrement (14) présente une teneur volumique en pores ≤ 2% et dans un essai de traction, il est obtenu une résistance à la traction perpendiculairement aux couches sandwich ≥ 3 Mpa avec le composant sandwich (10) resp une rupture d'alvéole, avec une résistance de traction propre du noyau en nid d'abeilles < 3MPa

10. Composant sandwich selon la revendication 9, qui présente une résistance à la traction d'au moins 1,5 MPa perpendiculairement aux couches sandwich

11. Composant sandwich selon la revendication 9 ou 10, obtenu par un procédé selon la revendication 2, la couche de recouvrement présentant une teneur volumique en pores ≤ 0,5 %
